# EUROPÄISCHE PATENTANMELDUNG

(11) **EP 4 068 057 A1**
(43) Veröffentlichungstag der Anmeldung: **05.10.2022**
(21) Anmeldenummer: 21166540.1
(22) Anmeldetag: 01.04.2021
(51) Int. Cl.: G06F 3/0354, G06F 3/041

(54) **BEDIENVORRICHTUNG UND BETRIEBSVERFAHREN FÜR EINE BEDIENVORRICHTUNG**

(71) Anmelder: Siemens Aktiengesellschaft, 80333 München (DE)
(72) Erfinder: STEGMEIER, Stefan, 81825 München (DE); KRIEGEL, Kai, 81739 München (DE); WEISBROD, Erik, 81369 München (DE)

(57) **Zusammenfassung**

Es wird eine Bedienvorrichtung (1) angegeben, umfassend
- eine Berührungsfläche (10), welche zur Berührung durch einen menschlichen Benutzer (20) vorgesehen ist und
- einen an die Berührungsfläche (10) angrenzenden flächigen Schichtaufbau (100) mit
- wenigstens einem Sensorelement (110)
- und wenigstens einem Heizelement (150),

- wobei die Bedienvorrichtung (1) ferner eine Ansteuereinheit (300) zur Ansteuerung des wenigstens einen Heizelements (150) mit Signalpulsen aufweist,
- wobei das wenigstens eine Heizelement (150) dazu ausgelegt ist, während eines Signalpulses eine temporäre, lokale Erwärmung im Bereich der Berührungsfläche (10) zu bewirken,
- und wobei das Sensorelement (150) dazu ausgelegt ist, eine Berührung der Bedienvorrichtung (1) und/oder eine Bewegung (31) in der Umgebung der Bedienvorrichtung (1) zu detektieren.
Weiterhin wird ein Verfahren zum Betrieb einer solchen Bedienvorrichtung (1) angegeben.

## Beschreibung

Die vorliegende Erfindung betrifft eine Bedienvorrichtung mit einer Berührungsfläche, welche zur Berührung durch einen Benutzer vorgesehen ist und einen an die Berührungsfläche angrenzenden flächigen Schichtaufbau aufweist. Weiterhin betrifft die Erfindung ein Verfahren zum Betrieb einer solchen Bedienvorrichtung.

Aus dem Stand der Technik sind zahlreiche unterschiedliche Typen von Bedienvorrichtungen bekannt, welche z.B. als Eingabegerät für einen menschlichen Benutzer eines elektrischen oder elektronischen Geräts dienen können. Beispielsweise kann es sich bei einer solchen Bedienvorrichtung um ein Kontrollpanel, eine Tastatur, einen Joystick oder eine andere Art von Eingabevorrichtung zur Eingabe von Befehlen handeln. Diese Bedienvorrichtungen weisen jeweils eine Berührungsfläche auf, durch deren Berührung die Interaktion mit dem Benutzer vermittelt werden kann. In eine solche Berührungsfläche können insbesondere druckempfindliche Sensoren eingebaut sein.

Weiterhin sind aber auch Bedienvorrichtungen bekannt, welche als mechanische Bedienelemente z.B. für einen Gebäudeteil, einen Einrichtungsgegenstand und/oder eine Maschine. Beispielsweise dienen die Griffe von Türen oder Fenstern als deren mechanische Bedienelemente. In ähnlicher Weise dienen die Griffe von Schubladen und Schränken der Bedienung von solchen Gegenständen, und ein mechanischer Bedienhebel kann zur Bedienung einer Maschine dienen. Dies alles sind ebenfalls Bedienvorrichtungen zur Interaktion zwischen einem Benutzer und einem Gegenstand, bei der eine bestimmte Berührungsfläche für diese Interaktion vorgesehen ist.

Nachteilig bei diesen Bedienvorrichtungen ist, dass sich im Bereich ihrer Berührungsflächen - insbesondere bei wiederholter Benutzung durch eine Vielzahl von Benutzern - gefährliche Keime auf diesen Oberflächen ansammeln können. Auf diese Weise können z.B. Viren, Bakterien oder Pilze von einem Benutzer auf den anderen übertragen werden. Um die Übertragung von Krankheitserregern über derartige Berührungsflächen zu vermeiden, gelten für solche Bedienvorrichtungen immer strengere hygienische Standards. Vor allem für medizintechnische Geräte, aber auch für Geräte der Lebensmittelherstellung und für andere industrielle Fertigungsgeräte sind die Anforderungen an die Keimfreiheit solcher Bedienoberflächen sehr streng. Dies gilt in ähnlicher Weise für die Berührungsflächen von den oben erwähnten Gebäudeteilen und Einrichtungsgegenständen.

Bisher wird dieses Problem meist dadurch gelöst, dass die Berührungsflächen solcher Bedienvorrichtungen in regelmäßigen Abständen durch Desinfektionsmittel desinfiziert werden. Diese Methode bringt allerdings den Nachteil mit sich, dass die Materialauswahl im Bereich der Oberflächen eingeschränkt ist, da die außenliegenden Materialien entsprechend robust gegenüber der chemischen Einwirkung des Desinfektionsmittels ausgestaltet sein müssen, und zwar auch über lange Betriebszeiträume und zunehmend häufigere Reinigungszyklen. Gerade in den Zeiten der Pandemiebekämpfung sind solche Berührungsflächen einem häufigen Kontakt mit zum Teil sehr aggressiven Desinfektionsmitteln ausgesetzt, was ihre Lebensdauer verkürzen kann.

Ein weiteres Problem bei der Anwendung von flüssigen Desinfektionsmitteln ist, dass diese Methode oft nur bei sehr glatten Oberflächen zuverlässig funktioniert. Bei stark konturierten Oberflächen, z.B. mit hinterschnittenen Strukturen oder anderen Erhöhungen oder Vertiefungen, ist die Behandlung mit einem flüssigen Desinfektionsmittel stark erschwert. Es besteht hier immer die Gefahr, dass sich trotz einer solchen Behandlung Krankheitserreger in den Ritzen oder Winkeln des Oberflächen-Reliefs ansammeln können und so zu einer Infektion eines nachfolgenden Benutzers führen können. Durch diese Problematik kommt es oft zu unerwünschten Einschränkungen in der Designfreiheit solcher Berührungsflächen, wodurch auch die technische Funktionalität eingeschränkt sein kann. Schließlich muss die Desinfektion mit flüssigen Desinfektionsmitteln in vielen Bereichen manuell durchgeführt werden, was zu einem hohen Arbeits- und Zeitaufwand führt, insbesondere in Labors, Kliniken, aber auch in industriellen Anlagen und bei anderen Arten von Gebäuden oder Geräten.

Aufgabe der Erfindung ist es daher, eine Bedienvorrichtung mit einer Berührungsfläche anzugeben, welche die genannten Nachteile überwindet. Insbesondere soll eine Berührungsfläche zur Verfügung gestellt werden, welche auf einfache Weise desinfiziert werden kann und gleichzeitig die Interaktion mit dem menschlichen Benutzer unterstützt. Eine weitere Aufgabe ist es, ein Verfahren zum Betrieb einer solchen Bedienvorrichtung anzugeben.

Diese Aufgaben werden durch die in Anspruch 1 beschriebene Bedienvorrichtung und das in Anspruch 13 beschriebene Betriebsverfahren gelöst. Die erfindungsgemäße Bedienvorrichtung weist eine Berührungsfläche auf, welche zur Berührung durch einen Benutzer vorgesehen ist. Sie umfasst einen an die Berührungsfläche angrenzenden flächigen Schichtaufbau mit wenigstens einem Sensorelement und wenigstens einem Heizelement. Die Bedienvorrichtung weist ferner eine Ansteuereinheit auf, die zur Ansteuerung des wenigstens einen Heizelements mit Signalpulsen ausgelegt ist. Das wenigstens eine Heizelement ist dazu ausgelegt, während eines solchen Signalpulses eine temporäre, lokale Erwärmung im Bereich der Berührungsfläche zu bewirken. Das Sensorelement ist dazu ausgelegt, eine Berührung der Bedienvorrichtung und/oder eine Bewegung in der Umgebung der Bedienvorrichtung zu detektieren.

Die Berührungsfläche ist insbesondere dazu ausgelegt, von dem Benutzer bei seiner Interaktion mit der Bedienvorrichtung berührt zu werden. Es soll also mit anderen Worten nicht nur eine Fläche sein, welche zufällig berührt werden kann, sondern welche gerade für die Interaktion mit dem Benutzer vorgesehen ist. Eine solche Interaktion kann beispielsweise eine Eingabe von Daten oder Anweisungen an ein elektrisches oder elektronisches Gerät sein, das mit einer solchen Bedienvorrichtung ausgestattet ist. Alternativ kann die Interaktion aber auch eine mechanische Interaktion sein, bei der z.B. ein Hebel betätigt wird oder ein Teil einer Vorrichtung positioniert oder auf andere Weise bewegt wird.

Durch die außenliegende Oberfläche des beschriebenen Schichtaufbaus ist die beschriebene Berührungsfläche definiert. Das wenigstens eine Sensorelement und das wenigstens eine Heizelement sind in den flächigen Schichtaufbau integriert, wobei diese Elemente wahlweise direkt an die Berührungsfläche angrenzen können oder auch als "vergrabene Elemente" weiter unten im Schichtaufbau liegen können. Die Signalpulse, welche das wenigstens eine Heizelement von der Ansteuereinheit erhält, können z.B. Strom- oder Spannungspulse sein. Solche elektrischen Steuerpulse sind gut dazu geeignet, in dem Heizelement eine kurzzeitige, starke Erwärmung zu bewirken. Um bei einem solchen Puls eine Erwärmung zu bewirken, kann das Heizelement ein Widerstandselement umfassen, in dem sich während eines Strompulses durch Umwandlung der elektrischen Energie in Joulesche Wärme auf einfache Weise eine Aufheizung ergibt. Es sind aber auch andere allgemein bekannte Prinzipien denkbar, um z.B. elektrische Energie lokal in Wärme umzuwandeln. So kann das Heizelement beispielsweise auch dazu ausgelegt sein, eine lokale Erwärmung durch die Bewegung von magnetischen Nanopartikeln in einem veränderlichen magnetischen bzw. elektromagnetischen Feld zu bewirken.

Ein wesentlicher Vorteil der Integration eines solchen Heizelements in den Schichtaufbau liegt darin, dass damit die Berührungsfläche durch die Ansteuerung mit den Signalpulsen kontrolliert durch kurzzeitige lokale Erwärmung desinfiziert werden kann. So können durch kurze Hitzepulse Krankheitserreger im Bereich der Berührungsfläche abgetötet werden. Dadurch können Infektionen zwischen unterschiedlichen Benutzern bei gemeinsamer Benutzung der Bedienvorrichtung wirksam vermieden werden. Das wenigstens eine Heizelement (bzw. gegebenenfalls eine Mehrzahl von solchen Heizelementen) ist/sind insbesondere so ausgestaltet, dass damit die ganze Berührungsfläche im Wesentlichen vollständig auf diese Weise desinfiziert werden kann. Dies muss nicht gleichzeitig für die ganze Fläche erfolgen, sondern kann ggf. auch durch wechselnde Ansteuerung von separaten Heizelementen erfolgen, die über die Berührungsfläche verteilt sind. Ein wesentlicher Vorteil der kurzzeitigen Erwärmung liegt darin, dass die Berührungsfläche nicht permanent auf einer für die Desinfektion notwendigen hohen Temperatur gehalten werden muss und dadurch eine wesentlich längere Lebensdauer aufweist. Es sind z.B. viele Polymermaterialien bekannt, welche stabil gegenüber gelegentlichen kurzzeitigen thermischen Belastungen sind, die aber bei dauerhafter Erwärmung im selben Temperaturbereich schnell degradieren. Aufgrund der nur kurzzeitigen Erwärmung kann also trotz der Möglichkeit der Desinfektion eine vergleichsweise lange Lebensdauer der Berührungsfläche gegeben sein. Hierzu ist kein Einsatz von aggressiven flüssigen Lösungsmitteln nötig, und das Funktionsprinzip ist auch kompatibel mit Unebenheiten in der Oberflächenstruktur. Zum Beispiel wird eine solche Desinfektion über Hitzepulse durch eine genoppte oder gerippte Oberfläche oder andere Arten von dreidimensionalen Strukturen im Unterschied zur Desinfektion mit flüssigen Lösungsmitteln nicht beeinträchtigt.

Das wenigstens eine Sensorelement ist dazu ausgelegt, eine Berührung der Berührungsfläche und/oder eine Bewegung in der Umgebung dieser Berührungsfläche zu detektieren. Mit anderen Worten dient das Sensorelement dazu, die Interaktion des Benutzers zu erfassen oder eine sonstige Veränderung in der Umgebung zu detektieren. Dabei kann eine Berührung insbesondere über eine Messung eines auf die Oberfläche einwirkenden Drucks detektiert und gegebenenfalls auch in Bezug auf die Stärke des Drucks quantifiziert werden. Dies kann insbesondere durch einen taktilen Drucksensor erfolgen. Eine Relativbewegung eines externen Objekts in der Umgebung der Bedienvorrichtung kann aber auch auf andere Weise gemessen werden. So kann ein Bewegungssensor ohne eine direkte Berührung der Oberfläche die Veränderung einer physikalischen Eigenschaft in der Umgebung der Bedienvorrichtung messen. Beispielsweise kann mit dem Sensorelement die Veränderung eines elektrischen, magnetischen bzw. elektromagnetischen Feldes in der Umgebung der Bedienvorrichtung gemessen werden. Alternativ oder zusätzlich kann auch die Wärmeabstrahlung eines Objektes (bzw. Benutzers) in der Umgebung der Bedienvorrichtung gemessen werden. Eine solche berührungslose Messung einer Wechselwirkung mit der Umgebung steht der grundsätzlichen Funktion als "Berührungsfläche" nicht entgegen: Vielmehr kann es auch bei der berührungslosen Detektion von Wechselwirkungen mit der Umgebung zweckmäßig sein, wenn die Desinfektion der Oberfläche (die trotzdem beim Betrieb zumindest gelegentlich berührt wird) auf die beschriebene Weise ermöglicht wird.

Durch die vorliegende Erfindung wird also insgesamt eine funktionale Sensorhaut für die Berührungsfläche einer Bedienvorrichtung geschaffen, welche zugleich eine integrierte Desinfektionsmöglichkeit aufweist. Die Sensorfunktion dieser Sensorhaut geht dabei über die Messung von inneren Eigenschaften des Schichtaufbaus hinaus: Es wird also insbesondere nicht (nur) eine durch die Funktion des Heizelements bedingte Temperatur innerhalb Schichtaufbau gemessen, sondern das wenigstens eine Sensorelement ist so ausgelegt, dass es über eine Messung einer physikalischen Eigenschaft im Bereich der außenliegenden Umgebung der Berührungsfläche bzw. über die Messung einer Einwirkung von außen auf die Berührungsfläche eine Berührung und/oder eine Bewegung detektieren kann. Insgesamt wird also eine hochfunktionale Oberfläche geschaffen, welche die Vorteile der Desinfektionsmöglichkeit und einer empfindlichen Sensorfunktion miteinander vereint. Dies ist vor allem bei solchen Bedienvorrichtungen vorteilhaft, welche von einer Mehrzahl von Benutzer bedient werden und bei welchen die Bedienung auf einer zu messenden Wechselwirkung zwischen der Bedienvorrichtung und der äußeren Umgebung basiert.

Das erfindungsgemäße Verfahren dient zum Betrieb einer erfindungsgemäßen Bedienvorrichtung. Es umfasst wenigstens die beiden folgenden Schritte:
a) Ansteuerung des wenigstens einen Heizelements mit einem Signalpuls, so dass durch den Signalpuls die Berührungsfläche im Bereich des Heizelements temporär und lokal erwärmt wird und
b) Messung einer physikalischen Eigenschaft mit dem Sensorelement.

Die in Schritt a) verwendeten Signalpulse dienen als Steuerpulse, mit denen die Funktion des wenigstens einen Heizelements kurzzeitig aktiviert wird. Dabei kann es sich insbesondere um eine regelmäßige oder auch unregelmäßige Abfolge von mehreren solchen Signalpulsen handeln. Mit anderen Worten kann Schritt a) innerhalb des Verfahrens mehrfach ausgeführt werden. Auch Schritt b) kann während des Betriebs mehrfach wiederholt werden, insbesondere kann die Messung auch kontinuierlich oder zumindest quasi-kontinuierlich erfolgen. Die Reihenfolge der beiden Schritte a) und b) ist grundsätzlich beliebig. Sie können insbesondere abwechseln aufeinander folgen, oder es können prinzipiell auch beide Schritte gleichzeitig durchgeführt werden. Die Vorteile des erfindungsgemäßen Verfahrens ergeben sich analog zu den oben beschriebenen Vorteilen der erfindungsgemäßen Vorrichtung. Die Messung der physikalischen Eigenschaft in Schritt b) kann dabei insbesondere die Detektion einer Berührung der Bedienvorrichtung und/oder die Detektion einer Bewegung in der Umgebung der Bedienvorrichtung ermöglichen.

Vorteilhafte Ausgestaltungen und Weiterbildungen der Erfindung gehen aus den von den Ansprüchen 1 und 13 abhängigen Ansprüchen sowie der folgenden Beschreibung hervor. Dabei können die beschriebenen Ausgestaltungen der Bedienvorrichtung und des Betriebsverfahrens allgemein vorteilhaft miteinander kombiniert werden.

So kann das wenigstens eine Sensorelement ein dreidimensional geformtes Teilelement aufweisen, das eine Höhe von wenigstens 5 µm und insbesondere sogar wenigstens 10 µm hat. Unter der Höhe soll hier allgemein die Abmessung eines Teilelements in vertikaler Richtung, also in Richtung senkrecht zur Schichtebene und damit auch senkrecht zur Berührungsfläche verstanden werden. Das Sensorelement soll mit anderen Worten eine unebene Struktur aufweisen und nicht nur durch ein flaches Schichtsystem gebildet sein. Die Vorteile der Erfindung kommen im Zusammenspiel mit solchen dreidimensional ausgeformten Sensorelementen besonders deutlich zum Tragen, da das Heizelement eine wirksame Desinfektion auch von unebenen Oberflächen ermöglicht. So kann insbesondere auch die außenliegende Berührungsfläche zumindest auf einer Skala von mehreren Mikrometern uneben ausgestaltet sein. Es ist aber alternativ auch möglich, dass die dreidimensional ausgeformte Höhenstruktur ganz oder teilweise durch eine darüberliegende Deckschickt planarisiert ist.

Für die Funktionsweise des wenigstens einen Sensorelements ergeben sich mehrere vorteilhafte Ausgestaltungen je nach Art der gemessenen physikalischen Größe. So kann es sich beispielsweise um einen taktilen Drucksensor handeln, mit welchem die Höhe eines auf die Berührungsfläche einwirkenden mechanischen Drucks gemessen werden kann. Auf diese Weise kann z.B. die Berührung eines Fingers, einer Hand oder eines Eingabestifts detektiert werden und der Anpressdruck gegebenenfalls auch quantifiziert werden. Alternativ kann der Sensor zur Messung eines elektrischen Feldes ausgelegt sein. Auf diese Weise kann die Relativbewegung eines externen Objekts detektiert werden, welches eine Änderung eines lokalen elektrischen Feldes im Bereich der Berührungsfläche bewirkt. In ähnlicher Weise kann eine solche Bewegung auch durch einen Sensor zur Messung einer magnetischen Eigenschaft bzw. eines elektromagnetischen Feldes detektiert werden. Alternativ kann das Sensorelement auch ein Chemosensor sein, insbesondere ein Gassensor und besonders vorteilhaft ein Gassensor zur Detektion von einer oder mehreren flüchtigen organischen Verbindungen. Auf diese Weise kann mit dem Sensor die Einwirkung von bestimmten Substanzen auf die Bedienvorrichtung detektiert werden. Dabei können unterschiedliche Messprinzipien zum Einsatz kommen. Der Chemosensor kann z.B. in grundsätzlich bekannter Weise als resistiver, kapazitiver, potentiometischer, amperometrischer, thermischer, thermochemischer, thermisch-physikalischer, gravimetrischer, optischer bzw. biochemischer Sensor ausgebildet sein. Allgemein ist die von dem Sensorelement gemessene physikalische Größe nicht (nur) eine Temperatur im Inneren des Schichtaufbaus, sondern es wird zumindest eine weitere physikalische Größe gemessen, welche die Detektion einer Berührung oder einer anderen Art der Wechselwirkung mit der äußeren Umgebung ermöglicht.

Weiterhin ergeben sich allgemein verschiedene vorteilhafte Ausgestaltungen des Sensorelements, je nach Art des Aufbaus des Sensorelements und des zugrundeliegenden Messprinzips. So kann das Sensorelement allgemein als kapazitiver Sensor, als resistiver Sensor, als MEMS-Sensor und/oder als Radarsensor ausgestaltet sein. Bei einem kapazitiven Sensor ändert sich die Kapazität eines Kondensators abhängig von der zu messenden physikalischen Eigenschaft. Bei einem resistiven Sensor wird die Änderung eines ohmschen Widerstands in Abhängigkeit von der Eigenschaft gemessen. Ein MEMS-Sensor ist ein mikroelektromechanisches (=MEMS) Sensorelement, bei welchem typischerweise ein bewegliches Biegeelement mit einer Strukturgröße im Mikrometerbereich mit Verfahren der Mikrosystemtechnik hergestellt wurde. Die mechanischen Eigenschaften eines solchen Biegeelements hängen dann wiederum von der zu messenden physikalischen Größe ab. So kann ein solcher MEMS-Sensor beispielsweise als Voltmeter, als Drucksensor oder als Bolometer ausgestaltet sein. Ein Radarsensor umfasst eine Radarantenne, insbesondere als Sende- und/oder Empfangsantenne für Funkwellen.

Allgemein vorteilhaft weist die Bedienvorrichtung zusätzlich zu dem bereits beschriebenen Sensorelement (dem ersten Sensorelement) zumindest ein weiteres Sensorelement (ein zweites Sensorelement auf), das auf einem vom ersten Sensorelement unterschiedlichen Messprinzip basiert. Beispielsweise ist das erste Sensorelement dazu ausgelegt, eine Berührung und/oder eine Bewegung eines externen Objekts zu messen und das zweite Sensorelement ist dazu ausgelegt, eine Temperatur innerhalb des Schichtsystems zu messen. So kann mit dem zusätzlichen zweiten Sensorelement über die aktuelle lokale Temperatur zusätzlich die Funktionsweise des wenigstens einen Heizelements überwacht werden. Insbesondere können innerhalb einer Bedienvorrichtung mehrere erste Sensorelemente und/oder mehrere zweite Sensorelemente vorliegen, welche jeweils über die Fläche verteilt angeordnet sein können. Auf diese Weise kann eine Sensorhaut mit noch stärker erweiterter Funktionalität zur Verfügung gestellt werden, mit anderen Worten eine multifunktionale Sensorhaut, welche sowohl die Messung einer äußeren Wechselwirkung als auch die Messung der inneren Temperatur innerhalb eines funktionalen Schichtsystems ermöglicht.

Allgemein und unabhängig von Art, Anzahl und Aufbau der einzelnen Sensorelemente kann die Integration von Sensorelement und Heizelement in einem gemeinsamen Schichtsystem auf unterschiedliche Weise realisiert sein. So können bei einer ersten Ausführungsvariante das wenigstens eine Sensorelement und das wenigstens eine Heizelement vertikal übereinander in den flächigen Schichtaufbau integriert sein, wobei das wenigstens eine Sensorelement der Berührungsfläche zugewandt ist. Auch hier ist mit der vertikalen Richtung allgemein die Raumrichtung senkrecht zur Schichtebene gemeint. Eine vertikal übereinanderliegende Anordnung ist allgemein dann besonders vorteilhaft, wenn das Sensorelement bzw. die Mehrzahl der Sensorelemente einen großen Anteil der zur Verfügung stehenden Fläche beanspruchen. So ist es z.B. bei einem Array von MEMS-Sensoren zweckmäßig, diese großflächig über die zur Verfügung stehende Oberfläche zu verteilen. Dabei ist die Anordnung des Sensorelements auf der außenliegenden Seite des Schichtaufbaus vor allem dann sinnvoll, wenn eine Abschirmung durch eine weiter außen liegende elektrisch leitfähige Schicht unerwünscht wäre. In solchen Fällen kann mit dem Schichtaufbau eine Wechselwirkung mit der äußeren Umgebung empfindlicher detektiert werden, wenn zwischen dem Sensorelement und der Berührungsfläche kein Heizelement mit einer elektrisch leitfähigen Schicht angeordnet ist. So ist z.B. bei vielen MEMS-Sensoren und auch bei Radarsensoren eine Abschirmung durch eine weiter außenliegende elektrisch leitfähige Schicht eher unerwünscht.

Bei einer alternativen, zweiten Ausführungsvariante sind das wenigstens eine Sensorelement und das wenigstens eine Heizelement ebenfalls vertikal übereinander in den flächigen Schichtaufbau integriert, aber das wenigstens eine Heizelement ist hier der Berührungsfläche zugewandt. Diese umgekehrte vertikale Abfolge ist vor allem dann zweckmäßig, wenn aufgrund des Messprinzips eine Abschirmung durch eine weiter außen liegende Schicht toleriert werden kann. Diese Abfolge ist z.B. dann besonders vorteilhaft, wenn es einen bestimmten Grund gibt, das Sensorelement durch eine weiter außen angeordnete Schicht zu schützen. So kann beispielsweise ein aus einzelnen Lamellen zusammengesetzter taktiler Sensor durch eine solche weiter außen liegende Schutzschicht vor einer Verunreinigung der Lamellen-Zwischenräume geschützt werden. Die Funktion dieser Schutzschicht kann dann besonders vorteilhaft von dem wenigstens einen Heizelement (bzw. der Schicht oder dem Schichtsystem mit einem oder mehreren Heizelementen) erfüllt werden.

Bei einer alternativen, dritten Ausführungsvariante sind das wenigstens eine Sensorelement und das wenigstens eine Heizelement horizontal nebeneinander in den flächigen Schichtaufbau integriert. Diese Variante ist vor allem dann zu bevorzugen, wenn weder das Sensorelement (bzw. die Mehrzahl von Sensorelementen) noch das Heizelement (bzw. die Mehrzahl von Heizelementen) die zur Verfügung stehende Fläche vollständig ausfüllt. Dies ist z.B. dann relevant, wenn ein Array aus mehreren Sensorelementen und mehreren Heizelementen vorliegt und in der Fläche genügend Platz für eine ineinander geschachtelte Anordnung von beiden Typen von Elementen vorhanden ist. Zum Beispiel können in die Zwischenräume zwischen mehreren Radarantennen oder zwischen Teilbereichen einer übergeordneten Radarantenne einzelne Heizelemente horizontal integriert sein. Auch hier wird eine Abschirmung des Sensorelements nach außen hin vorteilhaft vermieden.

Bei einer alternativen, vierten Ausführungsvariante weisen das wenigstens eine Sensorelement und das wenigstens eine Heizelement ein gemeinsames Teilelement auf. Das gemeinsam genutzte Teilelement weist somit eine Doppelfunktion auf, indem es sowohl als funktioneller Bestandteil des Sensorelements als auch als funktioneller Bestandteil des Heizelements wirkt. Insbesondere kann sogar das Heizelement als Ganzes als funktionelles Teilelement in das Sensorelement integriert sein. Beispielsweise kann das Heizelement ein Widerstandselement aufweisen (oder aus einem solchen Widerstandselement bestehen), welches gleichzeitig einen Teil einer Radarantenne oder Sensorelektrode ausbildet.

Alternativ zu einem solchen gemeinsam genutzten Teilelement kann es jedoch auch vorteilhaft sein, wenn das Sensorelement (oder ein Teilelement davon) und das Heizelement (oder ein Teilelement davon) zwar als separate Elemente realisiert sind, aber in derselben Schichtebene liegen und aus demselben Material gebildet sind. Auf diese Weise können z.B. eine Elektrode eines Sensorelements und eine Widerstandsschicht des Heizelements gemäß der dritten Ausführungsvariante horizontal nebeneinander vorliegen und in demselben Fertigungsschritt gleichzeitig hergestellt sein. Sie liegen dann in der gleichen Schichtdicke vor und sind aus demselben metallisch leitfähigen Material gebildet. Beispielsweise kann es sich dabei um eine metallisch leitfähige Schicht auf der Basis von Silber, Kupfer oder Aluminium (mit oder ohne Zusätze zur Einstellung von gewünschten Korngrenzen bzw. eines gewünschten elektrischen Widerstands) handeln. Es kann beispielsweise eine gedruckte, gerakelte oder dispenste Schicht aus einer Paste oder Tinte mit leitfähigen Partikeln sein. Eine solche metallisch leitfähige Schicht kann allgemein auch bei einer der anderen o.g. Varianten - also bei vertikaler Integration oder bei einem Teilelement mit Doppelfunktion - vorteilhaft zum Einsatz kommen.

Allgemein vorteilhaft kann die Bedienvorrichtung eine Mehrzahl von Sensorelementen und/oder eine Mehrzahl von Heizelementen umfassen. Dabei können ggf. sowohl die Sensorelemente als auch die Heizelemente über die Berührungsfläche verteilt angeordnet sein. Die Mehrzahl von Sensorelementen kann dabei insbesondere in einem regelmäßigen zweidimensionalen Muster, also in einem sogenannten Sensor-Array vorliegen. Dies ist allgemein vorteilhaft, um eine ortsaufgelöste Sensor-Funktionalität über weite Bereiche der Berührungsfläche zu erzielen. Auch die Mehrzahl von Heizelementen kann in einem regelmäßigen zweidimensionalen Muster vorliegen. Dies kann beispielsweise dazu dienen, um eine gewisse Ausfallsicherheit bezüglich der Heizfunktion zu erreichen. Wenn z.B. ein oder mehrere Heizelemente in einem Teilbereich der Berührungsfläche ausfallen, dann können trotzdem die übrigen Flächenbereiche durch die verbleibenden Heizelemente weiterhin desinfiziert werden. Mit einem solchen Array von Heizelementen ist es ferner auch möglich, nur einen ausgewählten Teilbereich der Berührungsfläche durch lokales Aufheizen zu desinfizieren. Dies kann z.B. dann sinnvoll sein, wenn nur ein Teil der Fläche durch die Berührung eines Benutzers verunreinigt worden ist. Diese lokale Berührung kann durch das Array der Sensorelemente detektiert und lokalisiert werden, und entsprechend kann dann durch die gezielte Ansteuerung der dortigen Heizelemente nur die tatsächlich berührte Teilfläche und ggf. ein gewisser Sicherheitsbereich um sie herum desinfiziert werden. So werden die übrigen Teilbereiche der Berührungsfläche von der thermischen Belastung verschont.

Sowohl das Array der Sensorelemente als auch das Array der Heizelemente kann eine regelmäßige Matrix aus Zeilen und Spalten ähnlich wie bei einem Display ausbilden. Dabei können die räumlichen Widerholungslängen der beiden Arrays untereinander gleich ausgestaltet sein oder sie können voneinander verschieden sein. Beispielsweise kann es zweckmäßig sein, das Sensor-Array in Abhängigkeit von der gewünschten Ortsauflösung etwas feiner zu strukturieren als das Array von Heizelementen, bei dem die zu desinfizierenden Flächenbereiche ggf. nur grob voneinander unterschieden werden müssen. Eine kurzzeitige lokale Aufheizung der jeweiligen Teilflächen kann z.B. dadurch erreicht werden, dass das gesamte Array zeilenoder spaltenweise nacheinander durch einzelne Signalpulse aktiviert wird. Mit einem solchen Ansteuermuster kann die thermische Belastung des Schichtsystems und auch die Peak-Leistung vorteilhaft gering gehalten werden, da dann nie alle Heizelemente gleichzeitig aktiviert sind.

Allgemein vorteilhaft kann die Ansteuereinheit für das wenigstens eine Heizelement gleichzeitig als Ansteuereinheit für das wenigstens eine Sensorelement dienen. Sie kann insbesondere als übergeordnete Ansteuer- und Ausleseeinheit für das Sensorelement genutzt werden und beispielsweise durch einen Mikroprozessor realisiert sein. Eine solche gemeinsame Ansteuereinheit bewirkt den Vorteil, dass z.B. die weiter oben beschriebene selektive Desinfektion von relevanten Teilflächen und/oder die sequentielle Desinfektion von einzelnen Zeilen oder Spalten des Heiz-Arrays von dieser übergeordneten Einheit aus gesteuert werden kann. Insgesamt wird eine hochfunktionelle Sensorhaut mit einheitlicher integrierter Ansteuerung erhalten. Optional können das wenigstens eine Heizelement und das wenigstens eine Sensorelement auch durch eine gemeinsame Energieversorgung mit elektrischer Energie versorgt werden, beispielsweise über einen in die Bedienvorrichtung eingebauten Akkumulator oder auch durch ein Photovoltaikelement oder durch einen Anschluss an das Stromnetz.

Der flächige Schichtaufbau kann allgemein auf einem oder mehreren Foliensubstraten aufgebaut sein. Insbesondere kann es sich bei dem Foliensubstrat um eine Polymerfolie handeln, auf der die übrigen Elemente durch strukturierte Beschichtung aufgebracht sind. Diese funktionellen Schichten des Sensorelements und/oder des Heizelementes können insbesondere zumindest zum Teil durch Drucken, Rakeln und/oder Dispensen aufgebracht sein. Das Schichtsystem kann vorteilhaft in einem Rolle-zu-Rolle-Prozess hergestellt sein. Der gesamte Schichtaufbau ist vorteilhaft so flexibel, dass er sich als funktionelle Haut auch an dreidimensional konturierte Berührungsflächen anschmiegen kann. Damit können auch komplexere Formen auf der Außenfläche der Bedienvorrichtung mit der beschriebenen Funktionalität versehen werden.

Allgemein vorteilhaft kann der flächige Schichtaufbau auf einer von der Berührungsfläche abgewandten Seite eine thermische Barriereschicht aufweisen. Eine solche (vom Heizelement aus gesehen) innenliegende Barriereschicht dient dazu, die lokale Heizwirkung des Heizelements auf den Außenbereich des Schichtsystems zu konzentrieren und eine unerwünschte Aufheizung eines darunterliegenden Grundkörpers der Bedienvorrichtung zu begrenzen. Als Materialien für eine solche thermische Barriereschicht eignet sich insbesondere eine Keramik, ein Polymer und/oder ein Siloxan.

Die Bedienvorrichtung kann allgemein vorteilhaft als Eingabevorrichtung oder Interaktionsvorrichtung für ein elektrisches und/oder elektronisches Gerät ausgestaltet sein. Mit anderen Worten wird dann ein solches Gerät mit einer Sensorhaut im Bereich einer seiner Außenflächen auf die beschriebene Weise funktionalisiert. Dies ist für allem für Geräte der Medizintechnik oder der industriellen Fertigungstechnik besonders vorteilhaft, wo Infektionen bei der wechselnden Bedienung durch mehrere Benutzer vermieden werden müssen. Die Bedienvorrichtung kann insbesondere als Eingabevorrichtung realisiert sein, so dass mittels einer Berührung der Berührungsfläche durch den Benutzer Daten bzw. Befehle eingegeben werden können. So kann es sich z.B. um ein Touch Panel oder einen Joystick handeln oder eine andere auf Berührung reagierende funktionelle Bedienfläche. Alternativ oder zusätzlich kann die Bedienvorrichtung aber auch als "sonstige" Interaktionsvorrichtung für das Gerät vorgesehen sein, beispielsweise als mechanische Interaktionsvorrichtung, mit der ein solches Gerät mechanisch bewegt oder ausgerichtet werden kann. Die Messung durch die funktionelle Sensorhaut ist allgemein nicht auf die Detektion einer Berührung beschränkt: So kann beispielsweise ein medizinisches Gerät oder eine Robotikvorrichtung durch die beschriebene Sensorhaut auch bei einer automatisierten Bewegung die Annäherung an externe Objekte autonom erkennen und gegebenenfalls nach einer solchen Detektion Maßnahmen zur Kollisionsvermeidung einleiten. Daher sind neben Berührungssensoren auch andere Sensortypen zweckmäßig, mit denen die Relativbewegung zwischen der Bedienvorrichtung und anderen Objekten erkannt werden kann.

Die Bedienvorrichtung muss nicht zwingend zur Bedienung eines elektrischen bzw. elektronischen Geräts ausgelegt sein. Alternativ kann es sich auch um eine Bedienvorrichtung handeln welche als mechanisches Bedienelement insbesondere für einen Gebäudeteil, einen Einrichtungsgegenstand und/oder eine Maschine ausgestaltet ist. Es kann sich also z.B. um den Griff einer Tür, eines Fensters, einer Schublade oder eines Schranks oder um einen mechanischen Bedienhebel einer Maschine handeln, welcher auf die beschriebene Weise mit der selbst-desinfizierenden Sensorhaut funktionalisiert ist. Dabei kann es sich wiederum besonders vorteilhaft um ein mechanisches Bedienelement für ein medizinisches Gebäude oder Mobiliar oder für einen Gegenstand des Laborbedarfs handeln. Allgemein und unabhängig davon, ob es sich um eine Eingabevorrichtung oder um eine mechanische Interaktionsvorrichtung handelt, kommen die Vorteile der Erfindung jedenfalls im Bereich der Medizin, Labor- und Lebensmitteltechnik, aber bei anderen industriellen Anwendungen besonders wirksam zum Tragen. Es sind jedoch auch viele andere Bereiche des öffentlichen Lebens denkbar, in denen solche multi-funktionellen selbst-desinfizierenden Sensoroberflächen in der Zukunft eingesetzt werden können.

Die Ansteuerung der Heizelemente in Schritt a) des Verfahrens kann insbesondere so erfolgen, dass kurzzeitig eine lokale Erwärmung der Berührungsfläche auf eine Maximaltemperatur erreicht wird, wobei diese Maximaltemperatur z.B. zwischen 60 °C und 300 °C liegen kann. Eine Maximaltemperatur oberhalb von 60 °C ist sinnvoll, da in diesem Bereich eine wirksame Denaturieren von Proteinen erreicht werden kann, was beispielsweise Voraussetzung für die Abtötung von Viren ist. Zur zuverlässigen Abtötung von Bakterien und anderen Krankheitserregern kann aber auch eine kurzzeitige Erwärmung mit einer Temperatur oberhalb von 80 °C und sogar oberhalb von 150 °C nötig sein. Die Obergrenze des relevanten Temperaturbereichs wird dagegen durch die Hitzebeständigkeit der äußeren Teile des Schichtsystems bestimmt. Die kurzzeitige Hitzebeständigkeit von vielen Polymersubstraten übersteigt jedoch meist sehr deutlich die Langzeitbeständigkeit in dem jeweiligen Temperaturbereich. So können selbst Polyethylene und Polypropylene kurzzeitig auf ca. 110 °C erhitzt werden, ohne dabei Schaden zu nehmen. Höher temperaturstabile Polymere wie z.B. Kapton können dagegen temporär auf höhere Maximaltemperaturen von 200 °C und mehr erwärmt werden. Die Zeitdauer der Signalpulse und damit der Erwärmung liegt dabei vorteilhaft im Bereich zwischen 0,1 Sekunden und 2 Sekunden. Der zeitliche Abstand der einzelnen Signalpulse eines gegebenen Heizelements kann im Vergleich dazu sehr groß sein und mehrere Minuten bzw. sogar Stunden oder Tage betragen, in Abhängigkeit von der relevanten Benutzungsfrequenz und der damit verbundenen Häufigkeit einer erneuten Keimbelastung der Oberfläche.

Gemäß einer vorteilhaften Ausführungsform des Verfahrens kann mittels Schritt a) für das Sensorelement eine vorbestimmte Temperatur eingestellt werden, so dass Schritt b) anschließend bei dieser vorbestimmten Temperatur durchgeführt wird. Diese Voreinstellung einer Solltemperatur kann durch ein oder mehrere Signalpulse mit einem oder mehreren Heizelementen erreicht werden und kann insbesondere durch einen optional vorhandenen zusätzlichen Temperatursensor kontrolliert und geregelt werden. Durch diese Art der Temperierung kann eine mit dem Sensor durchgeführte Messung unter Umständen wesentlich präziser erfolgen, da temperaturbedingte Schwankungen vorteilhaft reduziert werden. Optional kann dabei Schritt b) auch bei einer Serie von mehreren unterschiedlichen voreingestellten Temperaturen erfolgen, so dass eine gezielte temperaturabhängige Messung ermöglicht wird.

Gemäß einer weiteren vorteilhaften Ausführungsform des Verfahrens kann die Bedienvorrichtung während einer Betriebsphase durch wiederholte Ausführung von Schritt a) in einem vorbestimmten Temperaturbereich gehalten werden. Insbesondre liegt dann beim Betrieb die Berührungsfläche in dem vorbestimmten Temperaturbereich. Gegebenenfalls liegt auch das nahe beim Heizelement angeordneten Sensorelement in diesem Temperaturbereich. Die weiter innenliegenden Bereiche, insbesondere ein Grundkörper des Bedienelements jenseits einer thermischen Barriereschicht kann jedoch auch auf einem anderen Temperaturniveau bleiben. Diese Art der Temperierung der Berührungsfläche kann beispielsweise genutzt werden, um bei Outdoor-Anwendungen eine Defrost-Funktion der Bedienvorrichtung zu realisieren.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung einer Bedienvorrichtung nach einem Ausführungsbeispiel der Erfindung zeigt,
- Figur 2: ein erstes Beispiel für den Schichtaufbau in einer solchen Bedienvorrichtung zeigt,
- Figur 3: ein zweites Beispiel für den Schichtaufbau zeigt und
- Figur 4: ein drittes Beispiel für den Schichtaufbau zeigt.

In den Figuren sind gleiche oder funktionsgleiche Elemente mit gleichen Bezugszeichen versehen.

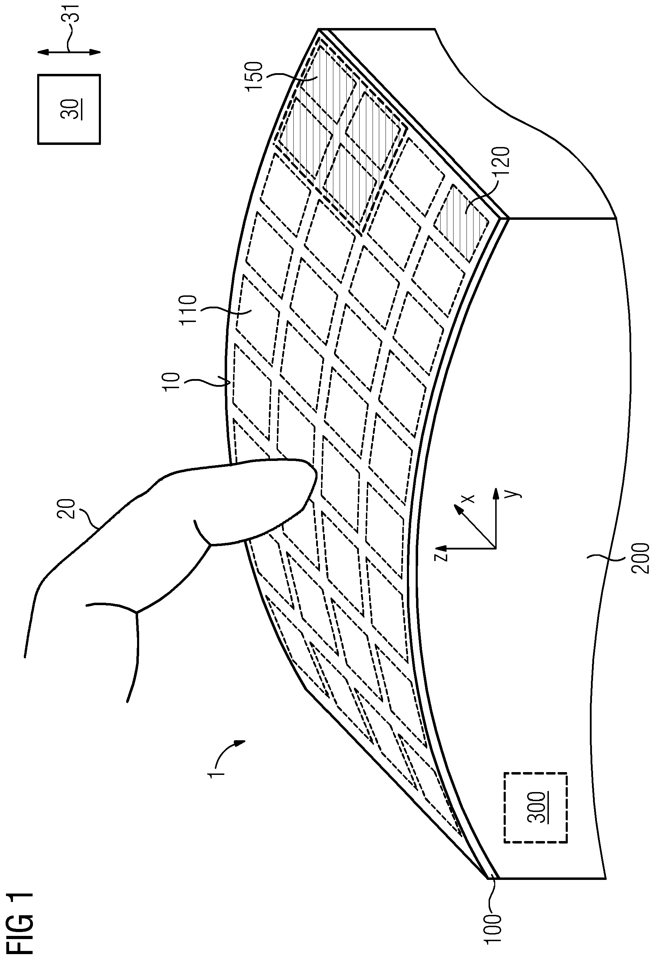

In Figur 1 ist eine schematische teilperspektivische Darstellung einer Bedienvorrichtung 1 nach einem Ausführungsbeispiel der Erfindung gezeigt. Diese Bedienvorrichtung kann beispielsweise eine Eingabevorrichtung zur Eingabe von Befehlen oder eine mechanische Interaktionsvorrichtung zur manuellen Positionierung einer medizinischen Diagnoseeinrichtung sein. Die Bedienvorrichtung 1 weist einen mechanisch tragenden Grundkörper 200 auf, der im Bereich seiner Außenfläche mit einer Sensorhaut überzogen ist. Diese Sensorhaut ist durch einen flächigen Schichtaufbau 100 gegeben. Auf der außenliegenden Seite weist dieser Schichtaufbau 100 eine Berührungsfläche 10 auf, welche zur Berührung durch einen menschlichen Benutzer vorgesehen ist, wie in Figur 1 durch den Finger 20 angedeutet. Der flächige Schichtaufbau 100 der Sensorhaut kann biegsam ausgestaltet sein und sich entsprechend an eine unebene Außenkontur des Grundkörpers 200 anschmiegen. Trotz der Möglichkeit einer solchen Krümmung ist an jedem Punkt der Fläche ein lokales Koordinatensystem definiert, wobei x und y die horizontalen Raumrichtungen innerhalb der Schichtebene sind und z die vertikale Koordinate senkrecht zur Schichtebene ist.

Durch den flächigen Schichtaufbau 100 ist eine multifunktionelle Sensorhaut gegeben. Diese Sensorhaut ermöglicht einerseits die Detektion einer Berührung, z.B. mit einem Finger 20 oder einer Relativbewegung 31 eines externen Objekts 30. Andererseits ermöglicht die Sensorhaut eine Selbst-Desinfektion ihrer Berührungsfläche 10. Die Detektion der Berührung bzw. Bewegung wird durch wenigstens ein Sensorelement 110 ermöglicht, das in den flächigen Schichtaufbau integriert ist. Im vorliegenden Beispiel liegt ein Array von vielen solchen Sensorelementen 110 vor, die in x- und y-Richtung über die Fläche verteilt sind. Das Array kann z.B. ein regelmäßiges Muster ausbilden. Eine solche Vielzahl von Sensorelementen 110 ermöglicht es, den Ort der Berührung bzw. die Position der Wechselwirkung mit einem externen Objekt 30 genauer zu erfassen. Ja nach Ausgestaltung der einzelnen Sensorelemente 110 kommen unterschiedliche Messprinzipien in Frage, wobei im Folgenden auf mehrere Beispiele näher eingegangen wird. Wesentlich ist aber, dass die Sensorelemente 110 geeignet sind, eine Wechselwirkung mit der äußeren Umgebung - sei es durch eine Berührung oder eine externe Bewegung - zu erfassen. Zusätzlich zu diesen ersten Sensorelementen 110 können optional noch ein oder mehrere weitere Sensorelemente 120 vorhanden sein, von denen hier nur eines beispielhaft gezeigt ist. Ein solches weiteres Sensorelement kann beispielsweise ein Temperatursensor sein, mit dem eine Temperatur innerhalb des Schichtsystems gemessen werden kann. Das weitere Sensorelement kann prinzipiell horizontal neben oder vertikal über den ersten Sensorelementen liegen.

Um die automatische Desinfektion der Berührungsfläche 10 zu ermöglichen, weist das Schichtsystem 100 auch ein oder mehrere Heizelemente 150 auf, von denen in Figur 1 nur eines beispielhaft gezeigt ist. Es können aber zweckmäßigerweise auch mehrere solche Heizelemente und insbesondere wiederum ein ganzes Array von über die Fläche verteilten Heizelementen vorliegen. Das dargestellte Heizelement 150 ist also hier nur als Ausschnitt aus einem solchen Array zu verstehen. Im gezeigten Beispiel sind die Heizelemente 150 größer ausgebildet als die Sensorelemente 110, und die Anzahl in dem Array ist für eine gegebene Fläche entsprechend geringer. Alternativ ist aber auch möglich, dass beide Elemente gleich groß ausgebildet sind oder dass die Heizelemente kleiner und entsprechend zahlreicher sind als die Sensorelemente. Auch das Größenverhältnis dient nur der schematischen Illustration. Die Heizelemente 150 liegen hier vertikal über oder den Sensorelementen 110, aber prinzipiell können die unterschiedlichen Elemente 110, 150 auch horizontal nebeneinander angeordnet sein.

Die Heizelemente 150 sind dazu ausgelegt, von einer Ansteuereinheit 300 angesteuert zu werden und insbesondere von dieser mit Signalpulsen versehen zu werden, die jeweils zu einer kurzzeitigen, lokalen Aufheizung der Berührungsfläche 10 im Bereich des gerade aktivierten Heizelements führen. Hierdurch kann ein relevanter Teilbereich der Oberfläche gezielt desinfiziert werden. Die Intervalle einer solchen gepulsten Desinfektion können an die jeweils geltenden Anforderungen und die Häufigkeit der Berührung angepasst werden. Um die gezielte Ansteuerung der einzelnen Heizelemente zu ermöglichen, sind diese insbesondere über hier nicht dargestellte elektrische Zuleitungen mit der Ansteuereinheit 300 verbunden. In ähnlicher Weise können auch die Sensorelemente 110 mit derselben Ansteuereinheit 300 verbinden sein, so dass diese eine Doppelfunktion erfüllt und zusätzlich ein Ansteuern und Auslesen der Sensorelemente 110 ermöglicht. Um die einzelnen Elemente 110 bzw. 150 ansteuern zu können, kann im Bereich der Zwischenräume ein Raster von Leiterbahnen angeordnet sein, mit denen die Elemente z.B. zeilen- bzw. spaltenweise oder auch elementweise angesteuert werden können. Das Ansteuerprinzip kann z.B. ähnlich wie in einem Passiv-Matrix-Display oder prinzipiell auch mit aktiver Ansteuerfunktion wie in einem Aktiv-Matrix-Display realisiert sein.

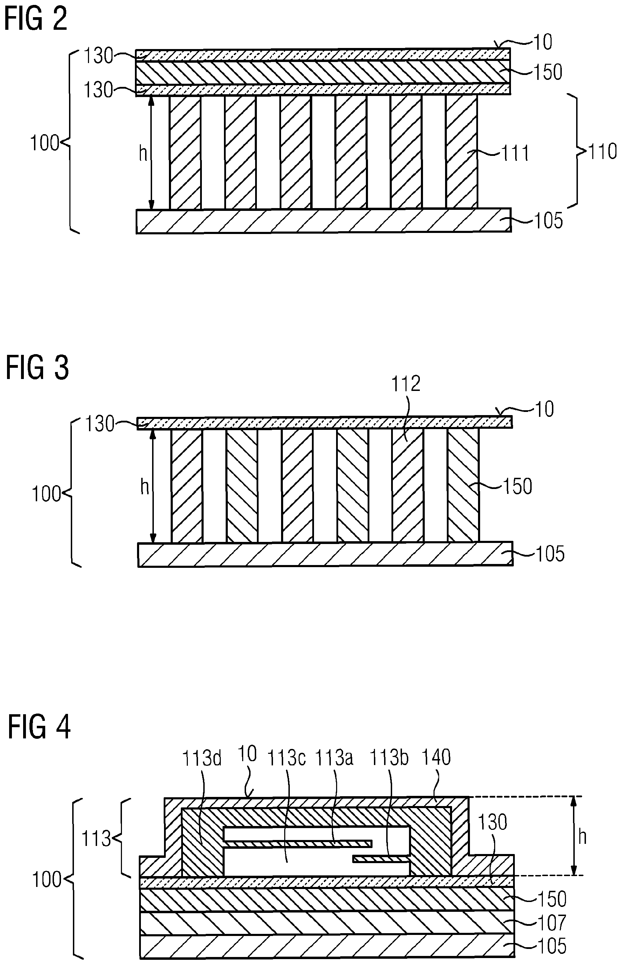

In Figur 2 ist ein erstes Ausführungsbeispiel für den Schichtaufbau 100 in einer solchen Bedienvorrichtung im schematischen Querschnitt gezeigt, also beispielsweise in yz-Richtung. Gezeigt ist ein Teilbereich im Bereich eines Sensorelements 110. Der Schichtaufbau umfasst ein Trägersubstrat 105, auf dem die übrigen Schichten aufgebaut sind und das beispielsweise als Foliensubstrat ausgestaltet sein kann. Auf diesem Substrat sind eine Mehrzahl von einzelnen Lamellen 111 aufgebracht, welche zusammen ein Sensorelement 110 ausbilden. Die vertikale Höhe h dieser Lamellen 111 kann beispielsweise 10 µm oder mehr betragen. Ein solches Sensorelement 110 kann z.B. ein resistiver Berührungssensor sein: Wenn durch Berührung ein Druck von außen auf die Berührungsfläche 10 aufgebracht wird, werden die Lamellen verformt, so dass es stellenweise zu Berührungen benachbarter Lamellen 110 kommt. Hierdurch kann ein Stromfluss zwischen benachbarten Lamellen erfolgen, und der elektrische Widerstand zwischen den Lamellen senkt sich sprunghaft. Um diese relativ empfindliche Lamellenstruktur gegen Beschädigung und Ablagerung von Verunreinigungen zu schützen, sind die Lamellen auf der Oberseite mit einer Isolationsschicht 130 versehen, welche auch die Zwischenräume überdeckt. Über dieser ersten Isolationsschicht 130 sind in diesem Beispiel die Heizelemente 150 aufgebracht, von denen im Ausschnitt der Figur 2 nur eines gezeigt ist.

Zum Schutz des Heizelements 150 vor Umgebungseinflüssen ist auf der Außenseite wiederum eine weitere planare Isolationsschicht 130 aufgebracht. Das Heizelement 150 ist hier als Widerstandsschicht realisiert, durch das bei Ansteuerung mit einem Signalpuls in horizontaler (x/y-) Richtung ein elektrischer Strom fließt, wodurch im Heizelement lokal Wärme dissipiert wird. Dies führt zu einer lokalen Erwärmung auch im Außenbereich der Berührungsfläche 10 und damit zu einer Desinfektion in diesem Bereich. Beim Beispiel der Figur 2 sind also das Sensorelement 110 und das Heizelement 150 vertikal übereinander in den Schichtaufbau integriert, wobei das Heizelement außen liegt. Diese Reihenfolge ist vor allem dann zweckmäßig, wenn wie hier die Funktion des Sensorelements 110 durch eine elektrische Abschirmung nicht wesentlich beeinträchtigt wird. Das Material des Heizelements 150 muss nur hinreichend flexibel sein, um die Krafteinwirkung bei einer Berührung an das darunterliegende Schichtsystem weiterzuleiten. Zum Beispiel kann die Widerstandsschicht durch eine leitfähige Paste mit metallischen Partikeln gebildet sein.

In Figur 3 ist ein zweites Ausführungsbeispiel für den Schichtaufbau 100 einer Sensorhaut im schematischen Querschnitt gezeigt. Auch hier sind die funktionalen Schichten auf einem Substrat 105 aufgebracht. Dabei enthält die angrenzende Schicht sowohl eine Radarantenne 112 eines Radarsensors als auch ein oder mehrere Heizelemente 150. Sowohl die Radarantenne 112 als auch die Heizelemente 150 können durch metallisch leitfähige Strukturen gebildet sein. Auch hier kann ihre vertikale Höhe h beispielsweise bei 10 µm oder mehr liegen. Es kann sich beispielsweise um eine Antennenstruktur aus einer gedruckten leitfähigen Schicht handeln. Innerhalb der Schichtebene (xy) kann eine solche Radarantenne eine komplexe Struktur aufweisen. Sie kann zum Beispiel nach Art eines Spirale geformt sein, so dass die in Figur 3 dargestellten Abschnitte der Antenne dann einzelne Windungen der übergeordneten Spirale darstellen können. Zwischen den Windungen der Antenne 112 können sich entsprechende Windungen des Heizelements 150 befinden, sodass die Radarantenne 112 und das Heizelemente 150 zusammen eine Doppelspirale ausbilden. Diese Doppelspirale kann in einem Schritt gedruckt werden, so dass dann beide Elemente insbesondere aus demselben Material gebildet sind. Es ist alternativ auch möglich, dass nur eine einzige Spirale vorliegt, dass also die in Figur 3 gezeigte Radarantenne 112 temporär als Heizelement 150 genutzt wird und dass die Radarantenne 112 somit eine Doppelfunktion erfüllt. Die in Figur 3 dargestellten zusätzlichen Strukturen des Heizelements 150 würden dann entfallen. In jedem Fall erfolgt der Stromfluss über das Heizelement 150 auch hier horizontal, also insbesondere entlang der Windungen der Spirale in der xy-Ebene. Die gemeinsame Schichtebene der Radarantenne 112 und des Heizelements 150 ist hier wiederum nach oben hin durch eine Isolations- und Schutzschicht 130 abgedeckt, welche eine Verunreinigung der Zwischenräume der dreidimensionalen Strukturen verhindert und diese auch vor einer mechanischen Schädigung schützt. Beim Beispiel der Figur 3 sind Heizelement(e) und Sensorelement(e) horizontal nebeneinander in den Schichtaufbau integriert, oder sie sind sogar mit einem gemeinsamen Teilelement gebildet. Ein Vorteil einer solchen horizontalen (oder vollen) Integration ist, dass keines der beiden Elemente die Funktionalität des anderen in Bezug auf die Wechselwirkung mit der Berührungsfläche 10 abschwächt oder dämpft: Insbesondere bei Radarantennen ist es vorteilhaft, wenn diese nach außen hin nicht durch eine leitfähige Schicht abgeschirmt werden. Auch der Heizeffekt ist besonders wirksam, wenn die Heizelemente wie hier nahe an der Berührungsfläche 10 angeordnet sind.

In Figur 4 ist ein drittes Ausführungsbeispiel für den Schichtaufbau 100 der Sensorhaut im schematischen Querschnitt gezeigt. In diesem Beispiel ist das Sensorelement als MEMS-Sensor 113 realisiert, was in der Figur nur äußerst schematisch durch das Vorliegen von zwei mechanisch beweglichen Biegeelementen 113a, 113b wiedergegeben ist. Diese Biegeelemente sind in einem Hohlraum 113c angeordnet, der durch eine umgebende Begrenzungswand 113d gebildet wird. Die Wand 113d kann auf Waferebene durch entsprechende Ausbildung des Hohlraums 113c und Freistellung der Biegeelemente 113a und 113b aus einem Wafersubstrat gebildet sein. Es reicht prinzipiell auch aus, wenn nur ein Biegeelement 113a vorhanden ist. Für solche MEMS-Sensoren 113 sind zahlreiche unterschiedliche Messprinzipien bekannt, die hier grundsätzlich alle zum Einsatz kommen können. Beispielsweis kann es sich um ein MEMSbasiertes Voltmeter, um ein Bolometer, einen Gassensor oder auch um einen Drucksensor handeln. Wesentlich ist auch hier, dass das Sensorelement 113 zur Messung einer äußeren Wechselwirkung, also einer Berührung oder einer Bewegung eines externen Objekts, geeignet ist. Die vertikale Höhe h des Sensorelements kann im Bereich von mehreren Mikrometern, beispielsweise in einem Bereich von 10 µm bis 100 µm, liegen. Dadurch ist eine relativ ausgeprägte dreidimensionale Struktur gegeben, welche bei einem Array von mehreren solchen Sensorelementen zu einer entsprechend strukturierten Gesamtfläche führen kann. Diese Struktur wird durch die darauffolgende Schutzschicht 140 (die auch hier elektrisch isolierend sein kann) nur teilweise ausgeglichen, so dass z.B. im Bereich der Berührungsfläche 10 eine genoppte Außenstruktur entsteht. Gerade für eine unebene Außenfläche ist es besonders vorteilhaft, wenn die Sensorhaut die erfindungsgemäße Desinfektions-Funktionalität aufweist.

Hierzu ist beim Beispiel der Figur 4 unterhalb der Ebene des Sensorelements 113 ein Heizelement 150 in den Schichtaufbau integriert. Das Sensorelement 130 ist durch eine Isolationsschicht 130 von dem Heizelement 150 getrennt. Auch hier kann das Heizelement 150 als flächige Widerstandsschicht gebildet sein, ähnlich wie beim Beispiel der Figur 2, mit Stromflussrichtung innerhalb der xy-Ebene. Auch hier können entsprechend mehrere solche Sensorelemente 113 und/oder mehrere solche Heizelemente 150 als flächiges Array vorliegen. Zum Substrat 105 hin ist in diesem Beispiel das Heizelement 150 noch durch eine zusätzliche thermische Barriereschicht 107 mit vergleichsweise geringer thermischer Leitfähigkeit getrennt. Dies ist nicht zwingend erforderlich, da die thermische Barrierewirkung prinzipiell durch das Substrat selbst erzielt werden kann. Aber eine solche zusätzliche Barriereschicht kann (auch bei den anderen Beispielen) nützlich sein, um die durch die Heizelemente bewirkte Erwärmung auf die außenliegende Berührungsfläche 10 zu konzentrieren und eine unnötige Erwärmung des Substrats 105 bzw. des darunterliegenden Grundkörpers der Bedienvorrichtung zu reduzieren. Dies ist insbesondere dann zweckmäßig, wenn wie beim Beispiel der Figur 4 Sensorelemente und Heizelement vertikal übereinander in den Schichtaufbau integriert sind und das Heizelement dabei weiter innen liegt. Anstelle der hier gezeigten Reihenfolge könnten solche MEMS-basierte Sensorelemente prinzipiell aber auch horizontal neben den Heizelementen oder unterhalb der Heizelemente integriert sein.

Für alle gezeigten Beispiele und alle Varianten der vertikalen bzw. horizontalen Integration der Sensorelemente und der Heizelemente gilt, dass beide Elemente als horizontales Array vorliegen können. Dabei können die Größenskalen der beiden unterschiedlichen Elemente aufeinander angepasst sein oder die Sensorelemente können kleiner und zahlreicher sein oder die Heizelemente können kleiner und zahlreicher sein. Beispielsweise können die Heizelemente allgemein eine laterale Größenskala im Bereich von 0,5 mm bis 5 mm aufweisen. Die Sensorelemente können allgemein eine laterale Größenskale im Bereich von 0,01 bis 5 mm aufweisen, wobei die Skala auch abhängig vom Sensortyp ist und zum Beispiel die MEMS-basierten Sensoren der Figur 4 eher im unteren Teil dieses Bereichs, die Lamellenstrukturen der Figur 2 eher im mittleren Teil dieses Bereichs und die Radarantennen der Figur 3 eher im oberen Teil dieses Bereichs liegen. Insgesamt kann durch Arrays von Heizelementen und Sensorelementen auf einer solchen Größenskala eine hochsensible und hoch ortsauflösende multifunktionelle Sensorhaut für Bedienvorrichtungen mit strengen Hygieneanforderungen zur Verfügung gestellt werden.

### Bezugszeichenliste

- 1: Bedienvorrichtung
- 10: Berührungsfläche
- 20: Finger
- 30: externes Objekt
- 31: Bewegung
- 100: flächiger Schichtaufbau (Sensorhaut)
- 105: Substrat
- 107: thermische Barriereschicht
- 110: Sensorelement
- 111: Lamelle
- 112: Radarantenne
- 113: MEMS-Sensor
- 113a: erstes Biegeelement
- 113b: zweites Biegeelement
- 113c: Hohlraum
- 113d: Begrenzungswand
- 120: weiteres Sensorelement
- 130: Isolationsschicht
- 140: Schutzschicht
- 150: Heizelement
- 200: Grundkörper
- 300: Ansteuereinheit
- h: Höhe
- x,y: horizontale Raumrichtungen
- z: vertikale Raumrichtung

## Patentansprüche

1. Bedienvorrichtung (1), umfassend
- eine Berührungsfläche (10), welche zur Berührung durch einen Benutzer (20) vorgesehen ist und
- einen an die Berührungsfläche (10) angrenzenden flächigen Schichtaufbau (100) mit
- wenigstens einem Sensorelement (110)
- und wenigstens einem Heizelement (150),
- wobei die Bedienvorrichtung (1) ferner eine Ansteuereinheit (300) zur Ansteuerung des wenigstens einen Heizelements (150) mit Signalpulsen aufweist,
- wobei das wenigstens eine Heizelement (150) dazu ausgelegt ist, während eines Signalpulses eine temporäre, lokale Erwärmung im Bereich der Berührungsfläche (10) zu bewirken,
- und wobei das Sensorelement (150) dazu ausgelegt ist, eine Berührung der Bedienvorrichtung (1) und/oder eine Bewegung (31) in der Umgebung der Bedienvorrichtung (1) zu detektieren.

2. Bedienvorrichtung (1) nach Anspruch 1, bei welcher das wenigstens eine Sensorelement (110) ein dreidimensional geformtes Teilelement (111,112,113) aufweist, das eine Höhe von wenigstens 5 µm hat.

3. Bedienvorrichtung (1) nach einem der Ansprüche 1 oder 2, bei welcher das wenigstens eine Sensorelement (110) ein taktiler Drucksensor, ein Sensor zur Messung eines elektrischen Felds, ein Magnetsensor, ein Sensor zur Messung eines elektromagnetischen Feldes und/oder ein Sensor zur Detektion von organischen Substanzen ist.

4. Bedienvorrichtung (1) nach einem der vorhergehenden Ansprüche, bei welcher das wenigstens eine Sensorelement (110) als kapazitiver Sensor, als resistiver Sensor, als MEMS-Sensor (113) und/oder als Radarsensor ausgestaltet ist.

5. Bedienvorrichtung (1) nach einem der vorhergehenden Ansprüche, welche zusätzlich zu dem wenigstens einen Sensorelement (110) zumindest ein weiteres Sensorelement (120) mit einem unterschiedlichen Messprinzip aufweist.

6. Bedienvorrichtung (1) nach einem der vorhergehenden Ansprüche, bei welcher das wenigstens eine Sensorelement (110) und das wenigstens eine Heizelement (150) vertikal übereinander in den flächigen Schichtaufbau (100) integriert sind, wobei das wenigstens eine Sensorelement (110) der Berührungsfläche (10) zugewandt ist.

7. Bedienvorrichtung (1) nach einem der Ansprüche 1 bis 5, bei welcher das wenigstens eine Sensorelement (110) und das wenigstens eine Heizelement (150) vertikal übereinander in den flächigen Schichtaufbau (100) integriert sind, wobei das wenigstens eine Heizelement (150) der Berührungsfläche (10) zugewandt ist.

8. Bedienvorrichtung (1) nach einem der Ansprüche 1 bis 5, bei welcher das wenigstens eine Sensorelement (110) und das wenigstens eine Heizelement (150) horizontal nebeneinander in den flächigen Schichtaufbau (100) integriert sind.

9. Bedienvorrichtung (1) nach einem der Ansprüche 1 bis 5, bei welcher das wenigstens eine Sensorelement (110) und das wenigstens eine Heizelement (150) ein gemeinsames Teilelement (112) aufweisen.

10. Bedienvorrichtung (1) nach Anspruch 1, bei welcher eine Mehrzahl von Sensorelementen (110) und eine Mehrzahl von Heizelementen (150) vorliegt,
wobei sowohl die Sensorelemente (110) als auch die Heizelemente (150) über die Berührungsfläche (10) verteilt angeordnet sind.

11. Bedienvorrichtung (1) nach einem der vorhergehenden Ansprüche, bei welcher die Ansteuereinheit (300) für das wenigstens eine Heizelement (150) gleichzeitig als Ansteuereinheit für das wenigstens eine Sensorelement (110) dient.

12. Bedienvorrichtung (1) nach einem der vorhergehenden Ansprüche, welche als Eingabevorrichtung oder Interaktionsvorrichtung für ein elektrisches und/oder elektronisches Gerät ausgestaltet ist.

13. Verfahren zum Betrieb einer Bedienvorrichtung (1) nach einem der vorhergehenden Ansprüche, umfassend wenigstens die beiden folgenden Schritte:
a) Ansteuerung des wenigstens einen Heizelements (150) mit einem Signalpuls, so dass durch den Signalpuls die Berührungsfläche (10) im Bereich des Heizelements (150) temporär und lokal erwärmt wird und
b) Messung einer physikalischen Eigenschaft mit dem Sensorelement (110).

14. Verfahren nach Anspruch 13, bei welchem mittels Schritt a) für das Sensorelement (110) eine vorbestimmte Temperatur zur Durchführung von Schritt b) eingestellt wird.

15. Verfahren nach einem der Ansprüche 13 oder 14, bei welchem die Bedienvorrichtung (1) während einer Betriebsphase durch wiederholte Ausführung von Schritt a) in einem vorbestimmten Temperaturbereich gehalten wird.
